# EUROPÄISCHE PATENTSCHRIFT

(11) **EP 3 645 615 B1**
(45) Veröffentlichungstag und Bekanntmachung des Hinweises auf die Patenterteilung: **11.08.2021**
(21) Anmeldenummer: 18724529.5
(22) Anmeldetag: 14.05.2018
(51) Int. Cl.: C08K 3/36, C07F 7/18, C08K 9/06

(54) **VERFAHREN ZUR HERSTELLUNG EINES SILANS, VERFAHREN ZUR MODIFIZIERUNG EINER KIESELSÄURE MIT DEM SILAN UND MODIFIZIERTE KIESELSÄURE**
METHOD FOR PRODUCING A SILANE, METHOD FOR MODIFYING A SILICA WITH THE SILANE, AND MODIFIED SILICA
PROCÉDÉ DE FABRICATION D'UN SILANE, PROCÉDÉ DE MODIFICATION D'UN ACIDE SILICIQUE AVEC UN SILANE ET ACIDE SILICIQUE MODIFIÉ

(30) Priorität: 30.06.2017 DE 102017211110
(43) Veröffentlichungstag der Anmeldung: 06.05.2020
(73) Patentinhaber: Continental Reifen Deutschland GmbH, 30165 Hannover (DE)
(72) Erfinder: JACOB, Andreas, 30449 Hannover (DE); DAUER, David-Raphael, 30167 Hannover (DE); STROHMEIER, Julian, 37574 Einbeck (DE); SCHÖFFEL, Julia, 30453 Hannover (DE); RECKER, Carla, 30167 Hannover (DE); SCHWEKENDIEK, Kirsten, 31515 Wunstorf (DE); MÜLLER, Norbert, 29336 Nienhagen (DE)
(74) Vertreter: Continental Corporation
(86) Internationale Anmeldenummer: PCT/EP2018/062293
(87) Internationale Veröffentlichungsnummer: WO 2019/001823

(56) Entgegenhaltungen:
- EP-A1- 2 944 640
- WO-A1-2015/172915
- JP-A- 2002 201 312

## Beschreibung

Die Erfindung betrifft ein Verfahren zur Herstellung eines Silans, ein Verfahren zur Modifizierung einer Kieselsäure mit dem Silan und eine modifizierte Kieselsäure.

Silane sind als Zuschlagstoffe für Kautschukmischungen, insbesondere für Fahrzeugreifen, bekannt, und zwar insbesondere für Kautschukmischungen, die wenigstens eine Kieselsäure als Füllstoff enthalten. Im Stand der Technik bekannte Silane gehen beispielsweise aus der DE 2536674 C3 und der DE 2255577 C3 hervor. Die Kieselsäure wird dabei mittels derartiger Silane an das oder die Polymer(e) angebunden, wodurch die Silane auch als Kupplungsagenzien bezeichnet werden. Durch die Anbindung der Kieselsäure mittels Silan-Kupplungsagenzien ergeben sich Vorteile hinsichtlich des Rollwiderstandsverhaltens und der Prozessierbarkeit der Kautschukmischung. Hierzu weist das Silan üblicherweise wenigstens eine Schwefelgruppierung auf, die an der Vulkanisation der Kautschukmischung beteiligt ist.
Neben den genannten Eigenschaften spielen aber auch weitere Eigenschaften der Kautschukmischung, insbesondere bei der Anwendung im Fahrzeugreifen, eine wichtige Rolle, wie insbesondere die Steifigkeit der Mischung, die sich u. a. auf das Handling-Verhalten des Fahrzeugreifens auswirkt.

In der WO 2015/172915 A1 wird eine Kautschukmischung enthaltend ein hamstoffhaltiges Silan offenbart, die im Vergleich zum Stand der Technik eine höhere Steifigkeit bei nahezu gleichbleibenden Indikatoren für Rollwiderstand und Nassgriff aufweist. Die Harnstoffgruppe ist hierbei im sogenannten Spacer, also der Abstandsgruppe zwischen Silizium (Anbindung an den Füllstoff) und Schwefel (Anbindung an den Dienkautschuk) enthalten.

In der JP P2002-201312 A werden Silane für Kautschukmischungen vorgeschlagen, die eine Harnstoffgruppierung oder ein Säureamid und einen Phenyl-Rest in der Abstandsgruppe aufweisen, wodurch eine verbesserte Dispersion von Ruß oder Kieselsäure als Füllstoffe in der Kautschukmischung erzielt werden könnte.

Der vorliegenden Erfindung liegt die Aufgabe zugrunde, ein Verfahren zur Herstellung eines neuartigen Silans und einer Form des Silans, die besonders für die Zugabe zu einer Kautschukmischung geeignet ist, bereitzustellen.

Das Silan soll bei Anwendung in einer Kautschukmischung, insbesondere für Fahrzeugreifen, im Vergleich zum Stand der Technik eine weitere Verbesserung der Steifigkeit und damit der Handling-Prediktoren der Kautschukmischung erzielen.

Gelöst wird die Aufgabe durch die erfindungsgemäßen Verfahren gemäß Anspruch 1 und 11, das erfindungsgemäße Silan nach Anspruch 10 und die erfindungsgemäße modifizierte Kieselsäure gemäß Anspruch 12.

Bei dem erfindungsgemäßen Verfahren gemäß Anspruch 1 wird ein Silan gemäß Formel I):

I) (R¹)ₒSi-R²-HNC(=O)NH-A-HNC(=O)-A-Sₖ-A-C(=O)NH-A-NHC(=O)NH-R²-si(R¹)ₒ,

wobei o = 1, 2 oder 3 sein kann und k eine ganze Zahl größer oder gleich 2 ist und die Reste R¹ innerhalb der Silylgruppen (R¹)ₒSi- und auf beiden Seiten des Moleküls gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische zweibindige C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, einbindige Alkyl-, Alkenyl-, Aryl- oder Aralkylgruppen, vorzugsweise -C₁₃H₂₇ Alkyl-Gruppe sind
   oder
   zwei R¹ bilden eine cyclische Dialkoxygruppe mit 2 bis 10 Kohlenstoffatomen wobei dann o < 3 ist,
   oder es können zwei oder mehr Silane gemäß Formel I) über Reste R¹ verbrückt sein; und
   wobei die Reste R² lineare oder verzweigte Alkylgruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen sind; und wobei die Gruppen A innerhalb eines Moleküls gleich oder verschieden voneinander sein können und aromatische Gruppen sind, wobei das Silan auch in Form von Oligomeren vorliegen kann, die durch Hydrolyse und Kondensation von Silanen der Formel I) entstehen,
durch wenigstens folgende Verfahrensschritte hergestellt:
   a) Bereitstellung einer Substanz (R¹)ₒSi-R²-HNC(=O)NH-A-NH₂;
   b) Bereitstellung einer Substanz HOC(=O)-A-S₂-A-C(=O)OH;
   c) Aktivierung der Substanz aus Schritt b), wobei diese in einem organischen Lösungsmittel suspendiert wird und in Anwesenheit eines Katalysators mittels eines Aktivators zu ClC(=O)-A-S₂-A-C(=O)C1 umgesetzt wird;
   d) Umsetzung von wenigstens zwei Äquivalenten der Substanz aus Schritt a) mit einem Äquivalent der Substanz aus Schritt c), wobei eine Lösung der Substanz aus Schritt a) in einem organischen Lösungsmittel mit einer Lösung der Substanz aus Schritt c) bei Raumtemperatur in Kontakt gebracht wird und anschließend für 4 bis 18 Stunden gerührt wird, wodurch ein Silan gemäß Formel I) erhalten wird;
   e) Optional Aufreinigung des in Schritt d) erhaltenen Silans gemäß Formel I).

Im Vergleich zu aus dem Stand der Technik bekannten Silanen weist das mit dem erfindungsgemäßen Verfahren hergestellte Silan mit der Gruppe -R²-HNC(=O)NH-A-HNC(=O)-A- eine vergleichsweise lange Abstandsgruppe zwischen den Si-Atomen und den S-Atomen auf, die wenigstens zwei aromatische Gruppen A und die Verknüpfungseinheiten -HNC(=O)NH- und -HNC(=O)- umfasst.

Hierdurch werden erfindungsgemäß ein neuartiges Silan und ein neues Verfahren zur Herstellung dieses Silans bereitgestellt. Eine Kautschukmischung, die das erfindungsgemäße Silan enthält, weist überraschenderweise eine höhere und damit verbesserte Steifigkeit auf, welche insbesondere auf die zwei vorhandenen aromatischen Gruppen A in Kombination mit den genannten Verknüpfungseinheiten innerhalb einer Abstandsgruppe (d. h. auf jeder Seite der Sₖ-Gruppierung) zurückgeführt werden könnte.

Mit dem erfindungsgemäßen Verfahren gemäß Anspruch 11 wird eine Kieselsäure hergestellt, die mit dem erfindungsgemäß hergestellten Silan modifiziert ist. Hiermit wird eine Form des Silans bereitgestellt, welche besonders geeignet ist, um sie einer Kautschukmischung, insbesondere für Fahrzeugreifen, zuzugeben.

Im Folgenden werden zum besseren Verständnis zunächst der Aufbau und die einzelnen Merkmale des Silans gemäß Formel I) erläutert.
Die Merkmale und bevorzugten Ausführungsformen der Reste kommen beim erfindungsgemäßen Verfahren durch die Auswahl der entsprechenden Ausgangssubstanzen zum Tragen.

Wie in Formel I) dargestellt erfolgt der prinzipielle Aufbau des Silans symmetrisch, wobei die Sₖ-Gruppierung als Mittelpunkt angesehen wird.

Die Gruppen -HNC(=O)- sind Carbonsäureamidgruppen, wobei die beiden jeweiligen Stickstoffatome auf beiden Seiten des Moleküls an diejenige aromatische Gruppe A angebunden sind, die -HNC(=O)NH- und -HNC(=O)- verknüpft.
Die Gruppe -HNC(=O)NH- stellt eine Harnstoffgruppe dar.

Bei den aromatischen Gruppen A kann es sich prinzipiell um jede aromatische Gruppe handeln, wobei die A auf jeder Seite des Moleküls gleich oder verschieden zueinander sein können. Die aromatischen Gruppen A können hierbei Heteroatome enthalten und/oder an einem oder mehreren Atomen des aromatischen Gerüstes Substituenten (für ein jeweiliges Wasserstoffatom) tragen, und zwar zusätzlich zu den formelgemäßen Substituenten -HNC(=O)NH-, -HNC(=O)- und Sₖ.
Bevorzugt ist es, dass die aromatischen Gruppen A ausgewählt sind aus der Gruppe bestehend aus Phenyl-, Naphthyl-, Pyridyl-, Pyridazyl-, Pyrimidyl-, Pyrazyl-, Triazyl-Chinolyl-, Pyrrol-, Furan-, Thiophen-, Pyrazol-, Imidazol-, Thiazol- und Oxazol Resten.

Die Verknüpfung der genannten Gruppen an der jeweiligen aromatischen Gruppe kann dabei über alle denkbaren Atome, insbesondere Kohlenstoffatome, des aromatischen Gerüsts erfolgen. Bei einem monozyklischen Aromaten mit sechs Gerüstatomen wie einem Phenylrest heißt das z. B., dass die Gruppen in para-, meta- oder ortho- Position zueinander angeordnet sein können.
Gemäß einer besonders vorteilhaften Ausführungsform der Erfindung sind alle A auf jeder Seite des Moleküls Phenyl-Reste.

Gemäß einer bevorzugten Ausführungsform der Erfindung sind -HNC(=O)NH- und -HNC(=O)- sowie -HNC(=O)- und -Sₖ- jeweils in para-Stellung zueinander an der jeweiligen aromatischen Gruppe A angeordnet.
Hierdurch ergibt sich eine längliche Molekülstruktur des Silans, die insbesondere in einer Kautschukmischung zu einer weiteren Erhöhung von deren Steifigkeit beitragen kann.

In einer weiteren bevorzugten Ausführungsform der Erfindung sind -HNC(=O)NH- und -HNC(=O)- in para-Stellung sowie -HNC(=O)- und -S₂- in ortho-Stellung zueinander an der jeweiligen aromatischen Gruppe A angeordnet.
Hierdurch ergibt sich eine rigide Molekülstruktur des Silans, die insbesondere in einer Kautschukmischung zu einer weiteren Erhöhung von deren Steifigkeit beiträgt.

Die Reste R¹ des erfindungsgemäßen Silans können innerhalb der Silylgruppen (R¹)ₒSi- und auf beiden Seiten des Moleküls gleich oder verschieden voneinander sein und sind ausgewählt aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische zweibindige C₁-C₃₀- Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, einbindige Alkyl-, Alkenyl-, Aryl- oder Aralkylgruppen, vorzugsweise -C₁₃H₂₇ Alkyl-Gruppe sind
oder
zwei R¹ bilden eine cyclische Dialkoxygruppe mit 2 bis 10 Kohlenstoffatomen wobei dann o < 3 ist,
oder es können zwei oder mehr Silane gemäß Formel I) über Reste R¹ verbrückt sein. Sämtliche genannten Reste R¹ und Verknüpfungen können innerhalb einer Silyl-Gruppe miteinander kombiniert sein.

Für den Fall, dass zwei Silane gemäß Formel I) mit einander verbrückt sind, teilen sie sich einen Rest R¹. Auf diese Weise können auch mehr als zwei Silane aneinander verknüpft sein. Im Anschluss an die Synthese des Silans gemäß Formel I) ist es somit denkbar, dass zwei Silane gemäß Formel I) über die Reste R¹ miteinander verbrückt werden. Auf diese Weise können auch mehr als zwei Silane aneinander verknüpft werden, wie beispielsweise über Dialkoxygruppen.
Das erfindungsgemäße Silan kann auch Oligomere umfassen, die durch Hydrolyse und Kondensation der Silane der Formel I) entstehen.

Das Silan gemäß Formel I) umfasst bevorzugt in jeder Silylgruppe (R¹)ₒSi- wenigstens einen Rest R¹, der als Abgangsgruppe dienen kann, wie insbesondere Alkoxy-Gruppen oder sämtliche andere der genannten Gruppen, die mit einem Sauerstoffatom an das Siliziumatom gebunden sind, oder Halogenide.

Es ist bevorzugt, dass die Reste R¹ Alkylgruppen mit 1 bis 6 Kohlenstoffatomen oder Alkoxygruppen mit 1 bis 6 Kohlenstoffatomen oder Halogenide umfassen, besonders bevorzugt sind Alkoxygruppen mit 1 bis 6 Kohlenstoffatomen.
Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o = 3 ist.
Aber auch bei Oligomeren oder im Fall, dass zwei R¹ eine Dialkoxy-Gruppe bilden, sind die übrigen Reste R¹ bevorzugt Alkylgruppen mit 1 bis 6 Kohlenstoffatomen oder Halogenide oder Alkoxygruppen mit 1 bis 6 Kohlenstoffatomen, bevorzugt 1 oder 2 Kohlenstoffatomen, also Methoxygruppen oder Ethoxygruppen, ganz besonders bevorzugt Ethoxygruppen.

Die Reste R² des erfindungsgemäß hergestellten Silans sind lineare oder verzweigte Alkylgruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen.

Es ist bevorzugt, dass die Reste R² lineare oder verzweigte Alkylgruppen mit 2 bis 8 Kohlenstoffatomen oder Cycloalkylgruppen mit 4 bis 8 Kohlenstoffatomen, wie insbesondere Cyclohexylreste, sind.
Gemäß einer besonders vorteilhaften Ausführungsform der Erfindung sind die Reste R² Alkylreste mit 2 bis 6 Kohlenstoffatomen, bevorzugt 2 bis 4 Kohlenstoffatomen, insbesondere bevorzugt 2 oder 3 Kohlenstoffatome, wobei Propylreste mit 3 Kohlenstoffatomen ganz besonders bevorzugt sind.

Die Gruppierung Sₖ stellt eine Sulfidbrücke aus k Schwefelatomen dar, wobei die k Schwefelatome aneinandergereiht sind, sodass das Molekül eine polysulfidische Gruppierung aufweist. Der Index k ist dabei eine ganze Zahl größer oder gleich 2.
Wie dem Fachmann bekannt, lässt sich die Disulfidgruppierung, die nach den Verfahrensschritten a) bis f) in einem weiteren Verfahrensschritt s) unter Zugabe von elementaren Schwefel durch Aufschwefelung in Polysulfide überführen, wodurch k größer oder gleich 3 erhalten wird, siehe hierzu Wang et al., Journal of Sulfur Chemistry, 2013, 34, 55-66.
Prinzipiell kann die Aufschwefelung auch zu einem früheren Verfahrensstadium vorgenommen werden, wie insbesondere bei den Ausgangsmolekülen bei der Synthese nach Schritt b) oder c). Hierbei wird die Synthese dann mit den Molekülen HOC(=O)-ASₖ-A-C(=O)OH bzw. ClC(=O)-A-Sₖ-A-C(=O)Cl weitergeführt.
Die Aufschwefelung kann auch vor der optionalen Aufreinigung nach Schritt d) erfolgen.

Bevorzugt ist k eine ganze Zahl von 2 bis 10 (einschließlich 2 und 10), besonders bevorzugt 2 bis 8, ganz besonders bevorzugt 2, 3 oder 4.
Im Fall von k größer oder gleich 3 wird die S₂-Gruppe des Moleküls aus den Schritten a) bis e) somit in einem weiteren Verfahrensschritt s) aufgeschwefelt, wodurch die Sₖ-Gruppe mit k > 2 entsteht.
Das erfindungsgemäß hergestellte Silan kann auch als Gemisch mit unterschiedlichen Werten für k vorliegen.
Hierdurch ergeben sich nach erfolgter Aufschwefelung folgende beispielhafte und bevorzugte Strukturformeln II) und III), mit k = bevorzugt 2 bis 8:

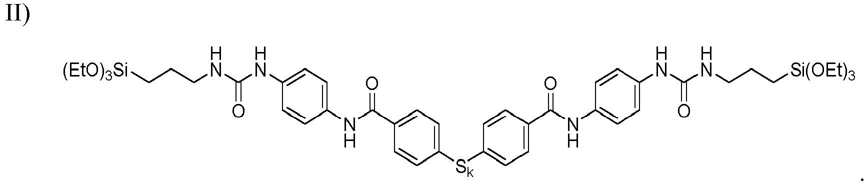

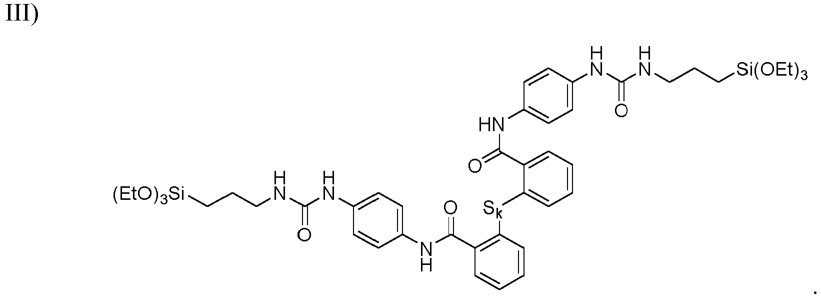

Hierbei sind im Hinblick auf Formel I) alle R¹ Ethoxygruppen, die R² Propylreste, und alle A Phenylreste, wobei im Fall des Moleküls II) alle Verknüpfungen in para-Stellung angeordnet sind und im Fall des Moleküls III) die Gruppen Sₖ- und -C(=O)NH in ortho-Stellung zueinander angeordnet sind.

Gemäß einer bevorzugten Ausführungsform der Erfindung ist k = 2.
In einer besonders bevorzugten und beispielhaften Ausführungsform der Erfindung ist k = 2 und das erfindungsgemäß hergestellte Silan weist beispielsweise die folgende Formel IV) auf: 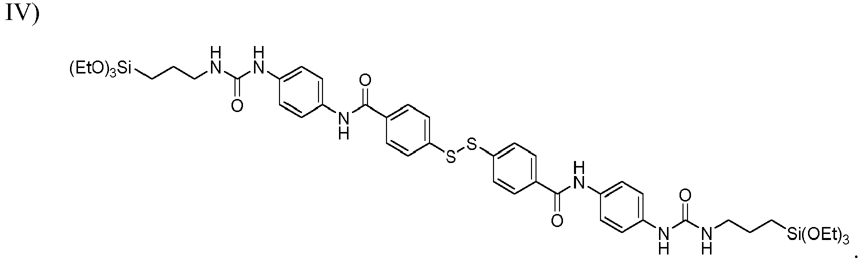 Das Silan gemäß Formel II) stellt ein bevorzugtes nach den Verfahrensschritten a) bis d) oder e) erfindungsgemäß hergestelltes Beispiel dar.

In einer weiteren besonders bevorzugten und beispielhaften Ausführungsform der Erfindung weist das erfindungsgemäß hergestellte Silan die folgende Formel V) auf:

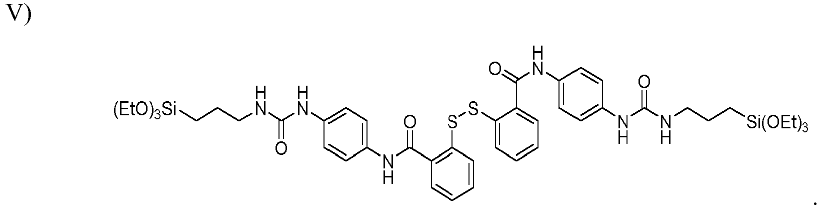

Hierbei sind im Hinblick auf Formel I) k = 2 und alle R¹ Ethoxygruppen, die R² Propylreste, und -HNC(=O)NH- und -HNC(=O)- in para-Stellung sowie -HNC(=O)- und - S₂- in ortho-Stellung zueinander an der jeweiligen aromatischen Gruppe A angeordnet, und alle A Phenylreste.

Das Silan gemäß Formel V) stellt ein bevorzugtes nach den Verfahrensschritten a) bis d) oder e) erfindungsgemäß hergestelltes Beispiel dar.

Im Folgenden werden die einzelnen Verfahrensschritte a) bis e) des erfindungsgemäßen Verfahrens zur Herstellung des Silans gemäß Formel I) erläutert.

Gemäß Schritt a) erfolgt zunächst die Bereitstellung einer Substanz (R¹)ₒSi-R²-HNC(=O)NH-A-NH₂. Für den Index o und die Reste R¹, R² und die Gruppen A gelten sämtliche obige Ausführungen.
Bevorzugt wird die Substanz (R¹)ₒSi-R²-HNC(=O)NH-A-NH₂ durch ein Verfahren a1) bereitgestellt, bei dem eine Umsetzung eines diaminosubstituierten Aromaten H₂N-A-NH₂ in einem organischen Lösungsmittel mit einem isocyanatofunktionalisierten Silan (R¹)ₒSi-R²-NCO erfolgt. Hierbei werden bevorzugt 2 Äquivalente des diaminosubstituierten Aromaten H₂N-A-NH₂ und 1 Äquivalent des isocyanatofunktionalisierten Silans (R¹)ₒSi-R²-NCO eingesetzt.

Gemäß einer besonders bevorzugten Ausführungsform der Erfindung sind alle R¹ Ethoxygruppen, R² eine Propylgruppe und A ein Phenylrest, wobei die beiden Aminogruppen in *para*-Stellung (1,4-Substitution am Aromaten) zueinander angeordnet sind.
Das organische Lösungsmittel ist gemäß einer bevorzugten Ausführungsform der Erfindung Dichlormethan (DCM).
Die Reaktion wird vorzugsweise bei Raumtemperatur (RT) durchgeführt und bevorzugt dadurch herbeigeführt, dass das funktionalisierte Silan (R¹)ₒSi-R²-NCO tropfenweise zu der Lösung des diaminosubstituierten Aromaten H₂N-A-NH₂ gegeben wird.

Das Reaktionsgemisch gemäß Schritt a1) wird bevorzugt über 6 bis 18 Stunden gerührt und anschließend das Lösungsmittel, bevorzugt DCM, im Vakuum entfernt. Anschließend erfolgt bevorzugt eine Aufreinigung, beispielsweise eine säulenchromatographische an Kieselgel oder eine andere geeignete Aufreinigung, wie Kristallisationsverfahren oder ein Ausfällen.
Schließlich wird das Produkt bevorzugt am Vakuum getrocknet.

Gemäß Schritt b) erfolgt die Bereitstellung einer Substanz HOC(=O)-A-S₂-A-C(=O)OH. Für die Gruppen A gelten sämtliche obige Ausführungen zur Silan-Struktur. Gemäß einer bevorzugten Ausführungsform der Erfindung sind beide A Phenylreste, wobei HOC(=O)- und -S₂- bevorzugt in para-Stellung (1,4-Substiution) angeordnet sind.
Sofern das Disulfid HOC(=O)-A-S₂-A-C(=O)OH nicht kommerziell erhältlich ist, erfolgt das Bereitstellen dieser Substanz in Schritt b) bevorzugt durch ein Verfahren b1), bei dem wenigstens 2 Äquivalente eines aromatischen Thiols HOC(=O)-A-SH in einem organischen Lösungsmittel in Gegenwart von 1 Äquivalent Iod oxidiert werden (um 1 Äquivalent des Disulfids herzustellen).
Das organische Lösungsmittel für das aromatische Thiol ist bevorzugt ein Alkohol, besonders bevorzugt Ethanol (EtOH).
Die Reaktion wird bevorzugt bei Raumtemperatur (RT) durchgeführt und bevorzugt dadurch herbeigeführt, dass eine gesättigte ethanolische Iodlösung tropfenweise zu einer Lösung des Thiols gegeben wird. Die Zugabe erfolgt bevorzugt gerade so lange bis in dem Reaktionsgemisch eine blass gelbe Farbe aufgrund überschüssigen Iods entsteht.
Die entstandene Reaktionsmischung wird filtriert und der Rückstand wird bevorzugt mit kaltem demineralisiertem Wasser und kaltem Ethanol gewaschen, um überschüssiges Iod zu entfernen, wobei "kalt" Kühlschrankkalt bedeutet und bevorzugt eine Temperatur von 0 bis +8 °C ist.
Schließlich wird das Produkt bevorzugt am Vakuum getrocknet.

Gemäß Verfahrensschritt c) erfolgt die Aktivierung der Substanz aus Schritt b), wobei diese in einem organischen Lösungsmittel suspendiert wird und in Anwesenheit eines Katalysators mittels eines Aktivators zu ClC(=O)-A-S₂-A-C(=O)C1 umgesetzt wird.
Bei dem organischen Lösungsmittel in Schritt c) handelt es sich bevorzugt um Tetrahydrofuran (THF).
Bei dem Katalysator handelt es sich insbesondere um einen organischen Katalysator und dabei insbesondere bevorzugt um katalytische Mengen Dimethylformamid (DMF).
Der Aktivator ist bevorzugt ausgewählt aus Oxalylchlorid und Thionylchlorid.
Bevorzugt werden 1 Äquivalent des Disulfids aus Schritt b) und 10 Äquivalente eines Aktivators, bevorzugt Oxalylchlorid, eingesetzt.
Die Reaktion wird bevorzugt bei 0 °C durchgeführt. Bevorzugt wird der Aktivator, z. B. das Oxalylchlorid, tropfenweise zu der Suspension des Disulfids gegeben und für 30 min bei 0 °C gerührt. Anschließend wird bevorzugt für 3 h bei RT gerührt.
Danach werden bevorzugt Lösungsmittel und überschüssiger Aktivator unter vermindertem Druck entfernt.
Das so erhaltene Reaktionsprodukt kann ohne weitere Aufreinigung im nächsten Schritt verwendet werden.

Gemäß Schritt d) erfolgt die Umsetzung von wenigstens zwei Äquivalenten der Substanz aus Schritt a) mit einem Äquivalent der Substanz aus Schritt c), wobei eine Lösung der Substanz aus Schritt a) in einem organischen Lösungsmittel mit einer Lösung der Substanz aus Schritt c) bei Raumtemperatur in Kontakt gebracht wird und anschließend für 4 bis 18 Stunden, bevorzugt 6 bis 18, besonders bevorzugt 6 bis 12 Stunden, gerührt wird, wodurch ein Silan gemäß Formel I) erhalten wird.
Bevorzugt werden 2,2 Äquivalente der Substanz aus Schritt a) umgesetzt. Das organische Lösungsmittel in Schritt d) ist bevorzugt für beide Substanzen (aus a) und c)) THF.
Die Reaktion wird bevorzugt bei RT durchgeführt und dadurch herbeigeführt, dass eine Lösung des Disulfids aus Schritt c) zu einer Lösung der Substanz aus Schritt a) getropft wird.
Die entstehende Suspension wird anschließend bevorzugt über 6 bis 12 Stunden gerührt und danach abfiltriert, wobei ein Silan gemäß Formel I) hergestellt ist.

Gemäß Verfahrensschritt e) erfolgt optional die Aufreinigung des in Schritt d) erhaltenen Silans gemäß Formel I), wobei sich die Art der Aufreinigung danach bestimmt, ob das Silan als Feststoff anfällt. In diesem Fall wird beispielsweise filtriert und der Filterkuchen nach dem Filtrieren bevorzugt mit kaltem THF und kaltem demineralisiertem Wasser gewaschen wird, wobei "kalt" auch hier bevorzugt eine Temperatur von 0 bis +8 °C bedeutet. Schließlich erfolgt bevorzugt die Trocknung des Produktes, Silan gemäß Formel I), am Vakuum.

Andernfalls kommt eine säulenchromatographische Aufreinigung in Betracht.

Es ist aber auch denkbar, das hergestellte Silan ohne einen Aufreinigungsschritt weiter zu verwenden, wie beispielsweise auf Kieselsäure aufzuziehen, wie unten beschrieben.

Das erfindungsgemäß hergestellte Silan gemäß Formel I) wird bevorzugt in weiteren erfindungsgemäßen Verfahrensschritten auf Kieselsäure aufgezogen, wodurch es in einer Form bereit gestellt wird, die besonders geeignet ist, um das Silan einer Kautschukmischung, insbesondere für Fahrzeugreifen, zuzugeben.

Diese weiteren Verfahrensschritte stellen eine Modifizierung von Kieselsäure mit dem erfindungsgemäß hergestellten Silan dar.
Hierzu umfasst das erfindungsgemäße Verfahren folgende weitere Verfahrensschritte:
f) Lösen des in Verfahrensschritt d) oder e) erhaltenen aufgereinigten Silans in einem organischen Lösungsmittel;
g) Inkontaktbringen wenigstens einer Kieselsäure mit der Lösung aus Schritt f) und anschließendes Rühren der entstandenen Suspension, bevorzugt für 30 Minuten bis 18 Stunden, insbesondere für 6 bis 18 Stunden;
h) Trocknen der erhaltenen modifizierten Kieselsäure.

Die Begriffe "Kieselsäure" und Silika" werden im Rahmen der vorliegenden Erfindung synonym verwendet.
Bei der Kieselsäure kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 95 bis 300 m²/g und ganz besonders bevorzugt von 115 bis 200 m²/g, aufweist. Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch Kieselsäuren mit einer vergleichsweise niedrigen BET-Oberfläche (wie z. B. Zeosil® 1115 oder Zeosil® 1085 der Firma Solvay) als auch hoch dispergierbare Kieselsäuren, so genannte HD-Kieselsäuren (z. B. Zeosil® 1165 MP der Firma Solvay).

Gemäß Verfahrensschritt f) erfolgt das Lösen des in Verfahrensschritt d) oder e) erhaltenen aufgereinigten Silans in einem organischen Lösungsmittel. Das organische Lösungsmittel in Schritt f) ist bevorzugt DMF.

Gemäß Verfahrensschritt g) erfolgt das Inkontaktbringen von wenigstens einer Kieselsäure mit der Lösung aus Schritt f) und anschließendes Rühren der entstandenen Suspension, bevorzugt für 30 Minuten bis 18 Stunden, besonders bevorzugt 4 bis 18 Stunden, wiederum bevorzugt 6 bis 18 Stunden. Bevorzugt wird bei einer Temperatur von 120 °C gerührt.
Über die Menge und Konzentration der Silan-Lösung und die Menge der suspendierten Kieselsäure wird das gewünschte Gewichtsverhältnis von Silan zu Kieselsäure eingestellt. Die Kieselsäure kann optional auch in Form einer Suspension in einem organischen Lösungsmittel, beispielsweise DMF, mit dem Silan in Kontakt gebracht werden.

Gemäß Verfahrensschritt h) erfolgt schließlich das Trocknen der erhaltenen modifizierten Kieselsäure. Hierzu wird bevorzugt das Lösungsmittel unter vermindertem Druck entfernt und das Produkt anschließend bevorzugt für 1 bis 3 Tage unter vermindertem Druck bei 20 bis 60 °C getrocknet.
Je nach gewünschter Feinheit kann die so vorgetrocknete modifizierte Kieselsäure optional zerkleinert werden. Im Anschluss wird die Kieselsäure bevorzugt 1 bis 3 weitere Tage bei 20 bis 60 °C am Vakuum getrocknet.

Die so erhaltene modifizierte Kieselsäure nach den Schritten f) bis h) ist ein weiterer Gegenstand der vorliegenden Erfindung.
Diese Kieselsäure ist besonders als Zuschlagstoff für Kautschukmischungen für Fahrzeugreifen geeignet, wobei sich durch die Kombination des Silans auf der Kieselsäure eine vereinfachte Prozessierbarkeit der Mischung ergibt und die Mischung zudem aufgrund des Silans gemäß Formel I) eine höhere und damit verbesserte Steifigkeit aufweist.

Im Folgenden soll die Erfindung anhand der Synthese der Silane gemäß Formel IV) und Formel V) erläutert werden:

### Herstellung des Silans gemäß Formel IV):

### 1. Herstellung von Bis-(4-carboxyphenyl)-disulfid nach dem Syntheseschema gemäß Formel VI)

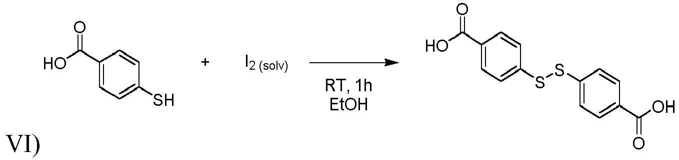

Zu einer Lösung von 4-Mercaptobenzoesäure (7.50 g, 48.6 mmol, 1.0 Äq.) in Ethanol (500 mL, EtOH) wurde bei Raumtemperatur tropfenweise eine gesättigte, ethanolische Iodlösung (insgesamt 25 mL) gegeben. Bei der Zugabe entfärbte sich die Iodlösung und die Reaktionsmischung trübte sich ein. Die Zugabe von Iod wurde solange fortgesetzt, bis die entstandene Suspension aufgrund des überschüssigen Iods eine blass gelbe Farbe annahm.

Anschließend wurde die Reaktionsmischung mittels Büchnertrichter filtriert und der Rückstand wurde mit kaltem demineralisiertem Wasser (4 x 50 mL) und kaltem Ethanol (4 x 50 mL) gewaschen, um das überschüssige Iod zu entfernen.

Nach Trocknen im Hochvakuum konnte die Zielverbindung in Form eines weißen Pulvers (6.69 g, 21.8 mmol, 90%) isoliert werden.
¹H NMR (500 MHz, DMSO-*d₆*; Dimethylsulfoxid) δ 13.08 (s, 2H), 7.97 - 7.88 (m, 4H), 7.67 - 7.59 (m, 4H).
¹³C NMR (126 MHz, DMSO-*d₆*) δ 167.22, 141.16, 130.83, 130.31, 126.54.

### 2. Herstellung von 1-(4'-Aminophenyl)-3-(3"-(triethoxysilyl)propyl)-hamstoff nach dem Syntheseschema gemäß Formel VII)

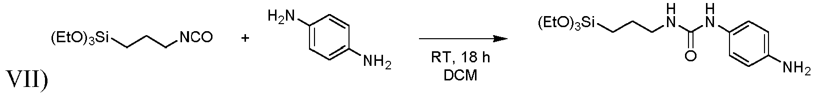

Zu einer Lösung von *para*-Phenylendiamin (10.00 g, 92.5 mmol, 2.0 Äq.) in Dichlormethan (300 mL DCM) wurde bei Raumtemperatur tropfenweise 3-(Isocyanatopropyl)-triethoxysilan (11.44 mL, 11.44 g, 46.2 mmol, 1.0 Äq.) gegeben. Nach Rühren über Nacht wurde das Lösungsmittel am Rotationsverdampfer entfernt und es konnte ein grauer Feststoff (21.57 g) als Rohprodukt erhalten werden.

Die säulenchromatographische Aufreinigung erfolgte in mehreren kleinen Portionen zu je ca. 3 - 4 g (jeweils ca. 74 w% Ausbeute) an Kieselgel (DCM/EtOH 9:1).

Nach dem Trocknen am Hochvakuum konnte die Zielverbindung in Form eines leicht grauen Feststoffes (extrapoliert für gesamtes Produkt: 15.96 g, 44.9 mmol, 97% bezogen auf Silan) isoliert werden.
¹H NMR (500 MHz, DMSO-*d₆*) δ 7.82 (s, 1H), 6.98 (d, *J=* 8.7 Hz, 2H), 6.45 (d, *J=* 8.7 Hz, 2H), 5.91 (t, *J =* 5.8 Hz, 1H), 4.66 (s, 2H), 3.74 (q, *J =* 7.0 Hz, 6H), 3.00 (q, *J =* 6.8 Hz, 2H), 1.48 - 1.39 (m, 2H), 1.14 (t, *J =* 7.0 Hz, 9H), 0.57 - 0.49 (m, 2H).
¹³C NMR (126 MHz, DMSO-*d₆*) δ 155.69, 143.33, 129.62, 120.22, 114.12, 57.70, 41.81, 23.49, 18.24, 7.25.

### 3. Herstellung von Bis-(4-carboxylchloridophenyl)-disulfid (in situ) nach dem Syntheseschema gemäß Formel VIII)

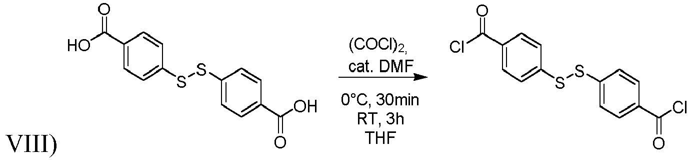

Zu einer Suspension von Bis-(4-carboxyphenyl)-disulfid (1.96 g, 6.4 mmol, 1.0 Äq.) in Tetrahydrofuran (60 mL THF) wurde Dimethylformamid (0.1 mL DMF, cat.) gegeben. Bei 0 °C wurde Oxalylchlorid (5.49 mL, 8.12 g, 64.0 mmol, 10.0 Äq.) tropfenweise zu der Reaktionsmischung gegeben und für 30 min bei der Temperatur gerührt. Anschließend wurde die entstandene gelbe Lösung für weitere 3 h bei RT gerührt. Danach wurden das Lösungsmittel und überschüssiges Oxalylchlorid abdestilliert. Es konnte ein gelber Feststoff isoliert werden, der ohne weitere Analytik oder Aufreinigung (aufgrund der Reaktivität) für den nächsten Syntheseschritt verwendet wurde.

### 4. Herstellung des Silans gemäß Formel IV) nach dem Syntheseschema gemäß Formel IX)

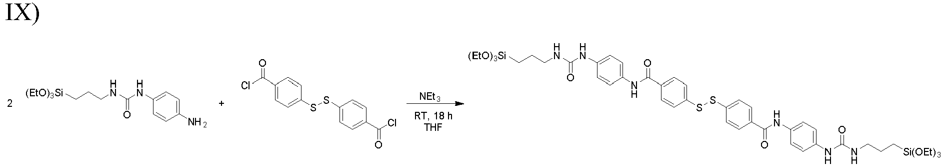

Zu einer Lösung von 1-(4-aminophenyl)-3-(3-(triethoxysilyl)propyl)-harnstoff (2.55 g, 7.17 mmol, 2.2 Äq.) und Triethylamin (2.11 mL, 1.65 g, 16.3 mmol, 5.0 Äq.) in THF (10 mL) wurde bei RT eine Lösung von Bis-(4-carboxylchloridophenyl)-disulfid (1.12 g, 3.26 mmol, 1.0 Äq.) in THF (40 mL) über einen Zeitraum von 15 min. getropft. Die entstandene blass gelbe Suspension wurde anschließend über Nacht gerührt und danach abfiltriert. Der Filterkuchen wurde mit kaltem THF (2 x 10 mL) gewaschen. Nach Trocknen im Hochvakuum konnte die Zielverbindung in Form eines weißen Pulvers (2.39 g, 2.44 mmol, 75 %) isoliert werden.
¹H NMR (500 MHz, DMSO-*d₆*) δ 10.13 (s, 2H), 8.45 (s, 2H), 7.94 (d, *J=* 8.5 Hz, 4H), 7.67 (d, *J=* 8.6 Hz, 4H), 7.56 (d, *J=* 9.0 Hz, 4H), 7.34 (d, *J=* 9.0 Hz, 4H), 6.23 (t, *J=* 5.8 Hz, 2H), 3.74 (q, *J=* 7.0 Hz, 12H), 3.03 (q, *J*= 6.6 Hz, 4H), 1.52 - 1.41 (m, 4H), 1.14 (t, *J* = 7.0 Hz, 18H), 0.60 - 0.51 (m, 4H).
¹³C NMR (126 MHz, DMSO-*d₆*) δ 164.32, 155.34, 139.05, 136.78, 134.16, 132.49, 128.75, 126.38, 121.10, 117.79, 57.80, 56.12, 41.84, 23.45, 18.31, 7.32.
²⁹Si NMR (99 MHz, DMSO-*d₆*) δ -44.52.

Das hergestellte Silan gemäß Formel IV) wird bevorzugt auf eine Kieselsäure aufgezogen, d.h. bevorzugt wird eine Kieselsäure mit dem hergestellten Silan gemäß Formel IV) modifiziert.

Das Aufziehen auf Kieselsäure erfolgt z. B. folgendermaßen:
Zu einer Suspension von granulierter Kieselsäure in DMF wird bei Raumtemperatur eine Lösung des Silans gemäß Formel IV) in dem gewünschten Verhältnis Kieselsäure / Silan gelöst in DMF gegeben. Beispielsweise werden 31,2 g Kieselsäure (VN3, Firma Evonik) und 4,62 g des Silans gemäß Formel IV) verwendet. Die entstehende Suspension wird über 6 bis 18 Stunden bei 120 °C gerührt und anschließend wird das Lösungsmittel unter vermindertem Druck entfernt. Nach einem Tag Trocknen am Hochvakuum bei 40 °C wird die so erhaltene modifizierte Kieselsäure zerkleinert. Anschließend wird einen weiteren Tag bei 40 °C am Hochvakuum getrocknet.

### Herstellung des Silans gemäß Formel V):

Die Herstellung des Silans V), also des bezüglich der disulfidischen Gruppe orthoverknüpften Silans, erfolgt prinzipiell analog zur Herstellung des Silans IV). Im Folgenden werden daher nur die Unterschiede beschrieben.
Die Synthese geht von dem kommerziell erhältlichen Bis-(2-carboxyphenyl)-disulfid aus, welches gemäß Schema X) mittels Oxalylchorid zu Bis-(2-carboxylchloridophenyl)-disulfid umgesetzt wird: 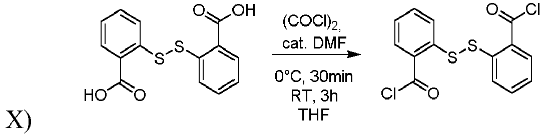 Zu einer Suspension von Bis-(2-carboxyphenyl)-disulfid (2.94 g, 9.6 mmol, 1.0 Äq.) in THF (60 mL) wurde DMF (0.15 mL, cat.) gegeben. Bei 0 °C wurde Oxalylchlorid (8.23 mL, 12.19 g, 96.0 mmol, 10.0 Äq.) tropfenweise zu der Reaktionsmischung gegeben und für 30 min bei der Temperatur gerührt. Anschließend wurde die entstandene gelbe Lösung für weitere 3 h bei RT gerührt. Danach wurden das Lösungsmittel und überschüssiges Oxalylchlorid abdestilliert.
Es konnte ein gelber Feststoff isoliert werden, der ohne weitere Analytik oder Aufreinigung (aufgrund der Reaktivität) für den nächsten Syntheseschritt verwendet wurde.

Anschließend erfolgt gemäß Syntheseschema XI) die Umsetzung mit 1-(4-aminophenyl)-3-(3-(triethoxysilyl)propyl)-harnstoff, welches wie oben beschrieben hergestellt wird.

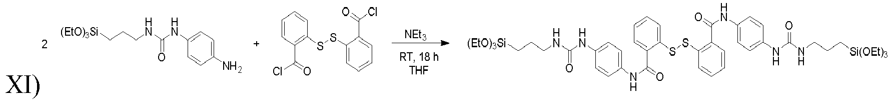

Zu einer Lösung von 1-(4-aminophenyl)-3-(3-(triethoxysilyl)propyl)-harnstoff (7.51 g, 21.1 mmol, 2.2 Äq.) und Triethylamin (6.65 mL, 4.86 g, 48.0 mmol, 5.0 Äq.) in THF (30 mL) wurde bei RT eine Lösung von Bis-(2-carboxylchloridophenyl)-disulfid (3.30 g, 9.6 mmol, 1.0 Äq.) in THF (80 mL) über einen Zeitraum von 15 min. getropft. Die entstandene blass gelbe Suspension wurde anschließend über Nacht gerührt und danach abfiltriert. Das Filtrat wurde eingeengt und der erneut ausgefallene Feststoff wurde erneut abfiltriert. Der Filterkuchen wurde mit kaltem THF (2 x 25 mL) und dem. Wasser (2 x 25 mL) gewaschen.
Nach Trocknen im Hochvakuum konnte die Zielverbindung in Form eines weißen Pulvers (2.70 g, 2.75 mmol, 29 %) isoliert werden.
¹H NMR (500 MHz, DMSO-*d₆*) δ 10.41 (s, 2H), 8.39 (s, 2H), 7.76 (d, *J=* 7.6 Hz, 1H), 7.72 (d, *J =* 8.1 Hz, 1H), 7.60 (d, *J =* 9.0 Hz, 3H), 7.50 (ddd, *J =* 8.5, 7.4, 1.5 Hz, 2H), 7.40 - 7.34 (m, 6H), 6.14 (t, *J=* 5.7 Hz, 2H), 3.75 (q, *J=* 7.0 Hz, 12H), 3.05 (q, *J=* 6.6 Hz, 4H), 1.54 - 1.42 (m, 4H), 1.15 (t, *J* = 7.0 Hz, 18H), 0.63 - 0.51 (m, 4H).
¹³C NMR (126 MHz, DMSO-*d₆*) δ 165.20, 155.21, 136.85, 136.49, 134.67, 132.32, 131.30, 128.37, 126.25, 126.09, 120.76, 117.77, 57.73, 41.77, 23.39, 18.25, 7.27.
²⁹Si NMR (99 MHz, DMSO-*d₆*) δ -44.57.

Das hergestellte Silan gemäß Formel V) wird bevorzugt auf eine Kieselsäure aufgezogen, d.h. bevorzugt wird eine Kieselsäure mit dem hergestellten Silan gemäß Formel V) modifiziert.
Das Aufziehen auf Kieselsäure erfolgt z. B. wie oben für das Silan gemäß Formel IV) beschrieben.

Im Folgenden werden beispielhafte Kautschukmischungen enthaltend die Silane gemäß Formel IV) oder V) beschrieben und mit Kautschukmischungen enthaltend ein aus dem Stand der Technik bekanntes Silan verglichen. Die Zusammensetzungen und Ergebnisse sind in Tabelle 1 zusammengefasst. Die Vergleichsmischungen sind mit V, die Mischungen enthaltend die erfindungsgemäßen Silane sind mit E gekennzeichnet. Die Mischungen V1 und E1 sowie V2 und E2 sowie V3 und E3 und E4 enthalten dabei jeweils molgleiche Mengen des Silans aus dem Stand der Technik (V1, V2, V3) bzw. des erfindungsgemäßen Silans IV) (E1, E2, E3) bzw. des erfindungsgemäßen Silans V) (E4).

Die Silane sind jeweils auf die Kieselsäure (95 phr in jeder Mischung) aufgezogen, sodass die jeweils Silan-modifizierte Kieselsäure eingemischt wurde. Die Mengenangaben beziehen sich damit auf die Produkte der Modifizierungsreaktionen, wobei in jeder Mischung 95 phr Kieselsäure eingesetzt wurden. Die Restmenge (Differenz: Tabellenwert minus 95 phr) stellt somit an die Kieselsäure angebundenes Silan dar.

Die Mischungsherstellung erfolgte ansonsten nach dem in der
Kautschukindustrie üblichen Verfahren unter üblichen Bedingungen in zwei Stufen in einem Labormischer mit 80 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. Durch Zugabe des Vulkanisationssystems in der zweiten Stufe (Fertigmischstufe) wurde die Fertigmischung erzeugt, wobei für 180 bis 300 Sekunden bei 90 bis 120 °C gemischt wurde.
Aus sämtlichen Mischungen wurden Prüfkörper durch Vulkanisation nach t₉₅ (gemessen am Moving Disc Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.
- Shore-A-Härte (Sh A) bei Raumtemperatur gemäß ISO 868
- Rückprallelastizität bei Raumtemperatur gemäß ISO 4662
- dynamischer Speichermodul E' bei 55 °C gemäß DIN 53 513 bei 0,15 % und 6 % Dehnung
- Spannungswert bei 50%, 100%, 200%, 300% und 400% Dehnung bei Raumtemperatur gemäß ISO 37, Prüfkörper Schulterstab Typ 3

### Verwendete Substanzen:

a) Kieselsäure: Ultrasil® VN3, Fa. Evonik, jeweils 95 phr, Restmenge jeweils angebundenes Silan
b) TESPD (3,3'-Bis(triethoxysilylpropyl)disulfid)
c) Erfindungsgemäßes Silan gemäß Formel IV), hergestellt wie vorstehend beschrieben
d) Erfindungsgemäßes Silan gemäß Formel V), hergestellt wie vorstehend beschrieben
e) Alterungsschutzmittel, Ozonschutzwachs, Zinkoxid, Stearinsäure
f) DPG und CBS.

Wie in Tabelle 1 erkennbar, liegen die Kautschukmischungen E1 bis E4 auf einem höheren Steifigkeitsniveau und weisen eine höhere Härte auf. Die erfindungsgemäßen Ausführungsbeispiele, also die Mischungen mit den erfindungsgemäß hergestellten Silanen zeigen somit insbesondere verbesserte Handling-Indikatoren.

Die erfindungsgemäßen Beispiele E1 bis E3 enthaltend das Silan gemäß Formel IV) weisen zudem mit den (im Vergleich zu V1 bis V3) geringeren Rückprallelastizitäten verbesserte Nassbrems-Indikatoren auf.

**Tabelle 1**

| **Bestandteile** | **Einheit** | **V1** | **V2** | **V3** | **E1** | **E2** | **E3** | **E4** |
|---|---|---|---|---|---|---|---|---|
| NR | phr | 20 | 20 | 20 | 20 | 20 | 20 | 20 |
| SSBR | phr | 80 | 80 | 80 | 80 | 80 | 80 | 80 |
| TDAE | phr | 35 | 35 | 35 | 35 | 35 | 35 | 35 |
| Kieselsäure ^{a)} + TESPD ^{b)} | phr | 98,4 | 99,4 | 100,5 | - | - | - | - |
| Kieselsäure ^{a)} + Silan IV) ^{c)} | phr | - | - | - | 102,7 | 105,2 | 107,8 | - |
| Kieselsäure ^{a)} + Silan V) ^{d)} | phr | - | - | - | - | - | - | 107,8 |
| Sonstige Zusatzstoffe ^{e)} | phr | 9 | 9 | 9 | 9 | 9 | 9 | 9 |
| Beschleuniger ^{f)} | phr | 3,6 | 3,6 | 3,6 | 3,6 | 3,6 | 3,6 | 3,6 |
| Schwefel | phr | 2 | 2 | 2 | 2 | 2 | 2 | 2 |
| | | | | | | | | |

| **Eigenschaften** | | | | | | | | |
|---|---|---|---|---|---|---|---|---|
| S50 | MPa | 1,1 | 1,2 | 1,2 | 1,4 | 1,5 | 1,9 | 1,8 |
| S100 | MPa | 1,9 | 1,9 | 2,0 | 2,3 | 2,6 | 3,1 | 3,0 |
| S200 | MPa | 3,9 | 4,0 | 4,2 | 4,7 | 5,8 | 6,3 | 6,1 |
| S300 | MPa | 6,3 | 6,6 | 7,0 | 7,6 | 9,6 | 10,1 | 9,7 |
| S400 | MPa | 9,0 | 9,2 | 9,9 | 10,8 | 13,4 | 13,8 | 13,3 |
| E' (6%) | MPa | 8,5 | 9,5 | 8,3 | 10,1 | 10,5 | 11,6 | 10,9 |
| E' (0,15 %) | MPa | 17,0 | 18,7 | 16,0 | 21,5 | 21,6 | 24,9 | 29,8 |
| Härte RT | ShA | 71,4 | 71,9 | 71,5 | 75 | 77,9 | 79 | 79,7 |
| Rückpr. RT | % | 17,4 | 17,4 | 18 | 15,8 | 16,6 | 15,8 | 25,4 |

## Patentansprüche

1. Verfahren zur Herstellung eines Silans gemäß Formel I):
I) (R¹)ₒSi-R²-HNC(=O)NH-A-HNC(=O)-A-Sₖ-A-C(=O)NH-A-NHC(=O)NH-R²-Si(R¹)ₒ,
wobei o = 1, 2 oder 3 sein kann und k eine ganze Zahl größer oder gleich 2 ist und die Reste R¹ innerhalb der Silylgruppen (R¹)ₒSi- und auf beiden Seiten des Moleküls gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische zweibindige C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, einbindige Alkyl-, Alkenyl-, Aryl- oder Aralkylgruppen, vorzugsweise -C₁₃H₂₇ Alkyl-Gruppe sind
oder
zwei R¹ bilden eine cyclische Dialkoxygruppe mit 2 bis 10 Kohlenstoffatomen wobei dann o < 3 ist,
oder es können zwei oder mehr Silane gemäß Formel I) über Reste R¹ verbrückt sein; und
wobei die Reste R² lineare oder verzweigte Alkylgruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen sind; und wobei die Gruppen A innerhalb eines Moleküls gleich oder verschieden voneinander sein können und aromatische Gruppen sind, wobei das Silan auch in Form von Oligomeren vorliegen kann, die durch Hydrolyse und Kondensation von Silanen der Formel I) entstehen,
wobei das Verfahren wenigstens folgende Verfahrensschritte umfasst:
a) Bereitstellung einer Substanz (R¹)ₒSi-R²-HNC(=O)NH-A-NH₂;
b) Bereitstellung einer Substanz HOC(=O)-A-S₂-A-C(=O)OH;
c) Aktivierung der Substanz aus Schritt b), wobei diese in einem organischen Lösungsmittel suspendiert wird und in Anwesenheit eines Katalysators mittels eines Aktivators zu ClC(=O)-A-S₂-A-C(=O)C1 umgesetzt wird;
d) Umsetzung von wenigstens zwei Äquivalenten der Substanz aus Schritt a) mit einem Äquivalent der Substanz aus Schritt c), wobei eine Lösung der Substanz aus Schritt a) in einem organischen Lösungsmittel mit einer Lösung der Substanz aus Schritt c) bei Raumtemperatur in Kontakt gebracht wird und anschließend für 4 bis 18 Stunden gerührt wird, wodurch ein Silan gemäß Formel I) erhalten wird;
e) Optional Aufreinigung des in Schritt d) erhaltenen Silans gemäß Formel I).

2. Verfahren nach Anspruch 1, wobei das Bereitstellen der Substanz in Schritt a) durch Umsetzung eines diaminosubstituierten Aromaten H₂N-A-NH₂ in einem organischen Lösungsmittel mit einem isocyanatofunktionalisierten Silan (R¹)ₒSi-R²-NCO erfolgt.

3. Verfahren nach einem der vorherigen Ansprüche, wobei das Bereitstellen der Substanz in Schritt b) durch Oxidation eines aromatischen Thiols HOC(=O)-A-SH in einem organischen Lösungsmittel in Gegenwart von Iod erfolgt.

4. Verfahren nach einem der vorherigen Ansprüche, wobei die aromatischen Gruppen A ausgewählt sind aus der Gruppe bestehend aus Phenyl-, Naphthyl-, Pyridyl-, Pyridazyl-, Pyrimidyl-, Pyrazyl-, Triazyl-, Chinolyl-, Pyrrol, Furan-, Thiophen-, Pyrazol-, Imidazol-, Thiazol- und Oxazol-Resten.

5. Verfahren nach einem der vorherigen Ansprüche, wobei die Reste R¹ Alkylgruppen mit 1 bis 6 Kohlenstoffatomen oder Alkoxygruppen mit 1 bis 6 Kohlenstoffatomen oder Halogenide sind.

6. Verfahren nach einem der vorherigen Ansprüche, wobei die Reste R² lineare oder verzweigte Alkylgruppen mit 2 bis 8 Kohlenstoffatomen oder Cycloalkylgruppen mit 4 bis 8 Kohlenstoffatomen sind.

7. Verfahren nach einem der vorherigen Ansprüche, wobei das hergestellte Silan gemäß Formel I) die folgende Formel II) aufweist:

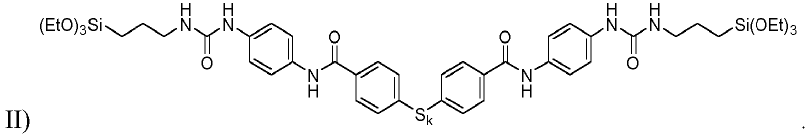

8. Verfahren nach einem der vorherigen Ansprüche, wobei das hergestellte Silan gemäß Formel I) die folgende Formel III) aufweist:

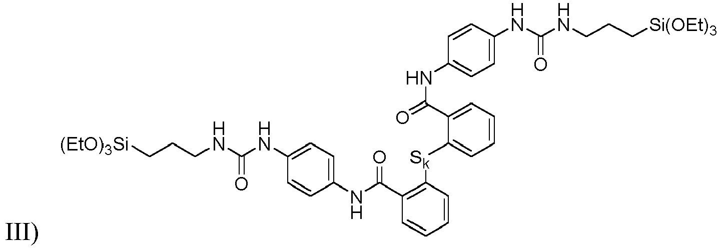

9. Verfahren nach einem der vorherigen Ansprüche, wobei nach einem weiteren Verfahrensschritt s) unter Zugabe von elementaren Schwefel eine Aufschwefelung durchgeführt wird, wodurch k größer oder gleich 3 erhalten wird.

10. Silan, welches durch das Verfahren nach einem der Ansprüche 1 bis 9 hergestellt ist.

11. Verfahren zur Herstellung einer Kieselsäure, welche mit wenigstens einem Silan hergestellt nach einem der Ansprüche 1 bis 9 modifiziert ist, wobei das Verfahren wenigstens folgende Verfahrensschritte umfasst:
f) Lösen des in Verfahrensschritt d) oder e) erhaltenen aufgereinigten Silans in einem organischen Lösungsmittel;
g) Inkontaktbringen wenigstens einer Kieselsäure mit der Lösung aus Schritt f) und anschließendes Rühren der entstandenen Suspension, bevorzugt für 30 Minuten bis 18 Stunden;
h) Trocknen der erhaltenen modifizierten Kieselsäure.

12. Modifizierte Kieselsäure, welche durch das Verfahren nach Anspruch 11 hergestellt ist.

## Claims

1. Process for preparing a silane of the formula I):
I) (R¹)ₒSi-R²-HNC(=O)NH-A-HNC(=O)-A-Sₖ-A-C(=O)NH-A-NHC(=O)NH-R²-Si(R¹)ₒ,
wherein o may be 1, 2 or 3 and k is an integer equal to or greater than 2 and the radicals R¹ within the silyl groups (R¹)ₒSi- and on both sides of the molecule may be identical or different and are selected from alkoxy groups having 1 to 10 carbon atoms, cycloalkoxy groups having 4 to 10 carbon atoms, phenoxy groups having 6 bis 20 carbon atoms, aryl groups having 6 to 20 carbon atoms, alkyl groups having 1 to 10 carbon atoms, alkenyl groups having 2 to 20 carbon atoms, alkynyl groups having 2 to 20 carbon atoms, aralkyl groups having 7 to 20 carbon atoms, halides or
alkyl polyether groups -O-(R⁶-O)ᵣ-R⁵ wherein R⁶ are identical or different and are branched or unbranched, saturated or unsaturated, aliphatic, aromatic or mixed aliphatic/aromatic divalent C₁-C₃₀ hydrocarbon groups, preferably -CH₂-CH₂-, r is an integer from 1 to 30, preferably 3 to 10, and R⁵ are unsubstituted or substituted, branched or unbranched, monovalent alkyl, alkenyl, aryl or aralkyl groups, preferably -C₁₃H₂₇ alkyl group
or
two R¹ form a cyclic dialkoxy group having 2 to 10 carbon atoms wherein o is then < 3,
or it is possible for two or more silanes of the formula I) to be coupled via radicals R¹; and
wherein the radicals R² are linear or branched alkyl groups having 1 to 20 carbon atoms or cycloalkyl groups having 4 to 12 carbon atoms or aryl groups having 6 to 20 carbon atoms or alkenyl groups having 2 to 20 carbon atoms, alkynyl groups having 2 to 20 carbon atoms or aralkyl groups having 7 to 20 carbon atoms; and wherein the groups A within a molecule may be identical or different and are aromatic groups, wherein the silane may also be present in the form of oligomers formed through hydrolysis and condensation of silanes of the formula I),
wherein the process comprises at least the following process steps:
a) providing a substance (R¹)ₒSi-R²-HNC(=O) NH-A-NH₂;
b) providing a substance HOC(=O)-A-S₂-A-C(=O)OH;
c) activating the substance from step b), wherein said substance is suspended in an organic solvent and in the presence of a catalyst is reacted with an activator to form ClC(=O)-A-S₂-A-C(=O)Cl;
d) reacting at least two equivalents of the substance from step a) with one equivalent of the substance from step c), wherein a solution of the substance from step a) in an organic solvent is brought into contact with a solution of the substance from step c) at room temperature and is then stirred for 4 to 18 hours, thereby obtaining a silane of the formula I);
e) optionally purifying the silane of the formula I) obtained in step d).

2. Process according to Claim 1, wherein the substance in step a) is provided by reacting a diamino-substituted aromatic H₂N-A-NH₂ in an organic solvent with an isocyanatofunctionalized silane (R¹)ₒSi-R²-NCO.

3. Process according to either of the preceding claims, wherein the substance in step b) is provided by oxidation of an aromatic thiol HOC(=O)-A-SH in an organic solvent in the presence of iodine.

4. Process according to any of the preceding claims, wherein the aromatic groups A are selected from the group consisting of phenyl, naphthyl, pyridyl, pyridazyl, pyrimidyl, pyrazyl, triazyl, quinolyl, pyrrole, furan, thiophene, pyrazole, imidazole, thiazole, and oxazole radicals.

5. Process according to any of the preceding claims, wherein the radicals R¹ are alkyl groups having 1 to 6 carbon atoms or alkoxy groups having 1 to 6 carbon atoms, or halides.

6. Process according to any of the preceding claims, wherein the radicals R² are linear or branched alkyl groups having 2 to 8 carbon atoms or cycloalkyl groups having 4 to 8 carbon atoms.

7. Process according to any of the preceding claims, wherein the prepared silane of the formula I) has the formula II) below:

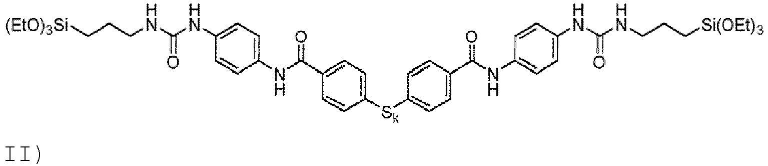

8. Process according to any of the preceding claims, wherein the prepared silane of the formula I) has the formula III) below:

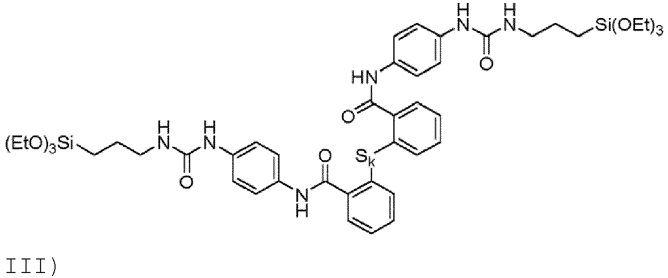

9. Process according to any of the preceding claims, wherein a sulfurization is carried out through the addition of elemental sulfur in a further process step s), whereby k equal to or greater than 3 is obtained.

10. Silane which is prepared by the process according to any of Claims 1 to 9.

11. Process for preparing a silica that is modified with at least one silane prepared according to any of Claims 1 to 9, wherein the process comprises at least the following process steps:
f) dissolving the purified silane obtained in process step d) or e) in an organic solvent;
g) bringing at least one silica into contact with the solution from step f) and then stirring the resulting suspension, preferably for 30 minutes to 18 hours;
h) drying the resulting modified silica.

12. Modified silica prepared by the process according to Claim 11.

## Revendications

1. Procédé pour la préparation d'un silane selon la formule I) :
I) (R¹)ₒSi-R²-HNC(=O)NH-A-HNC(=O)-A-Sₖ-A-C(=O)NH-A-NHC(=O)NH-R²-Si(R¹)ₒ,
dans laquelle o peut être égal à 1, 2 ou 3 et k représente un nombre entier supérieur ou égal à 2 et les radicaux R¹ dans les groupes silyle (R¹)ₒSi- sur les deux côtés de la molécule peuvent être identiques ou différents les uns des autres et sont choisis parmi les groupes alcoxy comprenant 1 à 10 atomes de carbone, les groupes cycloalcoxy comprenant 4 à 10 atomes de carbone, les groupes phénoxy comprenant 6 à 20 atomes de carbone, les groupes aryle comprenant 6 à 20 atomes de carbone, les groupes alkyle comprenant 1 à 10 atomes de carbone, les groupes alcényle comprenant 2 à 20 atomes de carbone, les groupes alcynyle comprenant 2 à 20 atomes de carbone, les groupes aralkyle comprenant 7 à 20 atomes de carbone, les halogénures ou les groupes -O-(R⁶-O)ᵣ-R⁵, les radicaux R⁶ étant identiques ou différents et représentant des groupes hydrocarbonés en C₁-C₃₀ ramifiés ou non ramifiés, saturés ou insaturés, aliphatiques, aromatiques ou aliphatiques/aromatiques mixtes, divalents, de préférence-CH₂-CH₂-, r représentant un nombre entier de 1 à 30, de préférence de 3 à 10, et R⁵ représentant des groupes alkyle, alcényle, aryle ou aralkyle non substitués ou substitués, ramifiés ou non ramifiés, monovalents, de préférence un groupe -C₁₃H₂₇-alkyle, ou deux radicaux R¹ forment un groupe dialcoxy cyclique comprenant 2 à 10 atomes de carbone, o étant alors < 3 ou deux silanes ou plus selon la formule I) pouvant être pontés via des radicaux R¹ ; et
les radicaux R² représentant des groupes alkyle linéaires ou ramifiés comprenant 1 à 20 atomes de carbone ou des groupes cycloalkyle comprenant 4 à 12 atomes de carbone ou des groupes aryle comprenant 6 à 20 atomes de carbone ou des groupes alcényle comprenant 2 à 20 atomes de carbone, des groupes alcynyle comprenant 2 à 20 atomes de carbone ou des groupes aralkyle comprenant 7 à 20 atomes de carbone ;
et les groupes A dans une molécule pouvant être identiques ou différents les uns des autres et représentant des groupes aromatiques, le silane pouvant également se trouver sous forme d'oligomères qui sont formés par hydrolyse et condensation de silanes de formule I),
le procédé comprenant au moins les étapes de procédé suivantes :
a) mise à disposition d'une substance (R¹)ₒSi-R²-HNC(=O)NH-A-NH₂ ;
b) mise à disposition d'une substance HOC(=O)-A-S₂-A-C(=O)OH ;
c) activation de la substance de l'étape b), celle-ci étant mise en suspension dans un solvant organique et transformée en présence d'un catalyseur au moyen d'un activateur en ClC(=O)-A-S₂-A-C(=O)Cl ;
d) transformation d'au moins deux équivalents de la substance de l'étape a) avec un équivalent de la substance de l'étape c), une solution de la substance de l'étape a) dans un solvant organique étant mise en contact avec une solution de la substance de l'étape c) à température ambiante et ensuite agitée pendant 4 à 18 heures, un silane selon la formule I) étant obtenu ;
e) purification éventuelle du silane selon la formule I) obtenu dans l'étape d).

2. Procédé selon la revendication 1, la mise à disposition de la substance dans l'étape a) ayant lieu par transformation d'un aromatique disubstitué par amino H₂N-A-NH₂ dans un solvant aromatique avec un silane à fonctionnalité isocyanato (R¹)ₒSi-R²-NCO.

3. Procédé selon l'une quelconque des revendications précédentes, la mise à disposition de la substance dans l'étape b) ayant lieu par oxydation d'un thiol aromatique HOC(=O)-A-SH dans un solvant organique en présence d'iode.

4. Procédé selon l'une quelconque des revendications précédentes, les groupes aromatiques A étant choisis dans le groupe constitué par les radicaux phényle, naphtyle, pyridyle, pyridazyle, pyrimidyle, pyrazyle, triazyle, quinoléyle, pyrrole, furane, thiophène, pyrazole, imidazole, thiazole et oxazole.

5. Procédé selon l'une quelconque des revendications précédentes, les radicaux R¹ représentant des groupes alkyle comprenant 1 à 6 atomes de carbone ou des groupes alcoxy comprenant 1 à 6 atomes de carbone ou des halogénures.

6. Procédé selon l'une quelconque des revendications précédentes, les radicaux R² représentant des groupes alkyle linéaires ou ramifiés comprenant 2 à 8 atomes de carbone ou des groupes cycloalkyle comprenant 4 à 8 atomes de carbone.

7. Procédé selon l'une quelconque des revendications précédentes, le silane préparé selon la formule I) présentant la formule II) suivante :

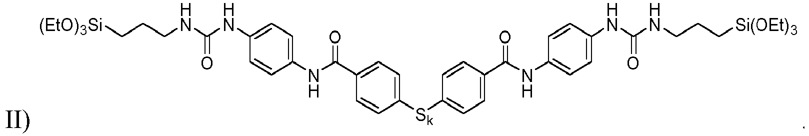

8. Procédé selon l'une quelconque des revendications précédentes, le silane préparé selon la formule I) présentant la formule III) suivante :

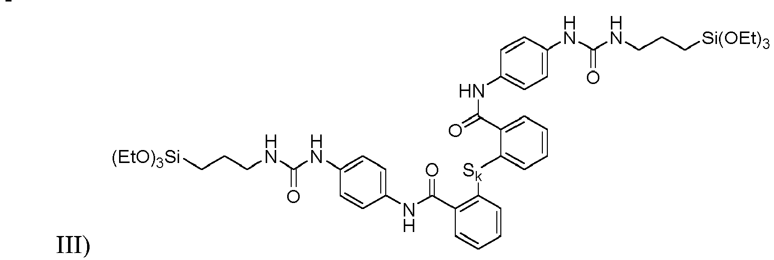

9. Procédé selon l'une quelconque des revendications précédentes, une sulfuration étant réalisée selon une autre étape s) par addition de soufre élémentaire, un indice k supérieur ou égal à 3 étant obtenu.

10. Silane, préparé par le procédé selon l'une quelconque des revendications 1 à 9.

11. Procédé pour la préparation d'une silice, qui est modifiée par au moins un silane préparé selon l'une quelconque des revendications 1 à 9, le procédé comprenant au moins les étapes de procédé suivantes :
f) dissolution du silane purifié obtenu dans l'étape de procédé d) ou e) dans un solvant organique ;
g) mise en contact d'au moins une silice avec la solution de l'étape f) et agitation consécutive de la suspension obtenue, de préférence pendant 30 minutes à 18 heures ;
h) séchage de la silice modifiée obtenue.

12. Silice modifiée préparée par le procédé selon la revendication 11.
